# EUROPEAN PATENT SPECIFICATION

(11) **EP 3 779 853 B1**
(45) Date of publication and mention of the grant of the patent: **21.06.2023**
(21) Application number: 19810555.3
(22) Date of filing: 16.05.2019
(51) Int. Cl.: G06Q 10/0639, G06Q 50/08, G09B 9/048, G09B 9/052

(54) **SKILL EVALUATION SYSTEM, SKILL EVALUATION METHOD, AND RECORDING MEDIUM**
KOMPETENZBEWERTUNGSSYSTEM, KOMPETENZBEWERTUNGSVERFAHREN UND AUFZEICHNUNGSMEDIUM
SYSTÈME D'ÉVALUATION DE COMPÉTENCE, PROCÉDÉ D'ÉVALUATION DE COMPÉTENCE ET SUPPORT D'ENREGISTREMENT

(30) Priority: 29.05.2018 JP 2018102756
(43) Date of publication of application: 17.02.2021
(73) Proprietor: KOBELCO CONSTRUCTION MACHINERY CO., LTD., Hiroshima-shi Hiroshima 731-5161 (JP)
(72) Inventor: SAIKI, Seiji, 731-5161 Hiroshima (JP); YAMAZAKI, Yoichiro, 731-5161 Hiroshima (JP)
(74) Representative: TBK
(86) International application number: PCT/JP2019/019520
(87) International publication number: WO 2019/230425

(56) References cited:
- DE-U1-202016 002 295
- JP-A- 2007 233 122
- JP-A- 2008 052 275
- JP-A- 2009 235 833
- JP-A- 2017 097 602
- US-A1- 2017 121 938
- US-A1- 2017 255 895

## Description

### Technical Field

The present invention relates to a technique for evaluating a skill level of an operator who remotely operates a construction machine.

### Background Art

In recent years, with the aging of operators of construction machines, the shortage of operators has become serious, and it is becoming difficult for a work orderer to secure operators. Therefore, expectations are growing for a remote operation system with which an operator operates a construction machine remotely without going to a work site.

With the remote operation system, operators can be recruited not only from all domestic regions but also from other countries, making it easy for the work orderer to secure operators. In addition, with the remote operation system, it is unnecessary for the operator to go to the work site, enabling a flexible way of work by changing the work site according to a time zone, such as working at one work site in one time zone, and working at another work site in the next time zone.

In this way, the remote operation system has an advantage for the work orderer that selections for operators are widened. However, conventionally, a skill of an operator has not been evaluated objectively. Therefore, there is a problem that the work orderer does not know to which operator to order work from among a large number of operators.

In particular, when ordering new work to an operator who is not acquainted at all, the work orderer has no other choice but to select the operator depending on intuition if the skill of the operator is unknown. In this case, the work orderer hesitates to order work to the new operator because of anxiety that it is unclear whether the selected operator will work as expected.
However, this does not take full advantage of the remote operation system that provides wider selections for the operator, and the labor market of the remote operation system cannot be revitalized.

Document JP 2002-108 975 A merely discloses a construction volume management system that calculates productivity in each of a plurality of work groups when civil engineering work is performed by the work groups based on machine information, personnel information, work time, and construction work output in each work group. Therefore, the above problems cannot be solved.

Document US 2017/255 895 A1 discloses an evaluation device which includes a detection data acquisition unit that acquires detection data including a detected movement trajectory of a predetermined portion of a working unit of a working vehicle based on operation data of the working unit from a movement starting position to a movement ending position, detected by a detection device that detects an operation of the working unit, a target data generation unit that generates target data including a target movement trajectory of the predetermined portion of the working unit, and an evaluation data generation unit that generates evaluation data of an operator who operates the working unit based on the detection data and the target data.

Furthermore, Document DE 20 2016 002 295 U1 discloses a crane, a construction machine or an industrial truck, with a control station including at least one input means for inputting control commands, a graphical simulation module for calculating a virtual representation of the machine surroundings and/or machine components visible from the control station, such as a boom or a load hook, and a display device for displaying the calculated virtual representation, wherein a movement simulation module is provided for determining movements and/or deformations of the machine components according to the inputted control commands, depending on which the graphical simulation module calculates the virtual representation.

### Summary of Invention

An object of the present invention is to provide a skill evaluation system or the like that can present an objective evaluation indicator of a skill of an operator who remotely operates a construction machine.

This object is achieved by a skill evaluation system according to claim 1. Furthermore, a skill evaluation method according to claim 10 is provided. Advantageous further developments are as set out in the dependent claims.

The skill evaluation system according to one aspect includes: a remote operation device configured to allow an operator to remotely operate a construction machine; and a server communicatively connected to the remote operation device. The server includes: an acquisition unit configured to acquire an operation record of the remote operation device by the operator, and a test result of a predetermined test for ensuring that a skill level of the operator for the remote operation is equal to or higher than a certain level; a work history database configured to store the operation record and the test result as a work history; a skill level calculation unit configured to calculate the skill level of the operator for the remote operation based on the work history stored in the work history database; and a presentation unit configured to present the skill level.

The present invention makes it possible to present an objective evaluation indicator of an operator's skill.

### Brief Description of Drawings

FIG. 1 is a block diagram showing an overall configuration of a skill evaluation system according to an embodiment of the present invention.
FIG. 2 is a view showing an outline of the skill evaluation system according to the present embodiment.
FIG. 3 is a diagram showing a configuration of a work record database.
FIG. 4 is a table summarizing a machine range, ATT type, and tip ATT type.
FIG. 5 is a diagram showing a configuration of a simulator record database.
FIG. 6 is a diagram showing a configuration of a test record database.
FIG. 7 is a diagram showing one example of a rank determination table.
FIG. 8 is a diagram showing a configuration of an operator database.
FIG. 9 is a view showing a detailed screen for an operator.
FIG. 10 is a flowchart showing processing when the skill evaluation system according to the present embodiment calculates a skill level.
FIG. 11 is a flowchart showing processing when the skill evaluation system in the present embodiment transmits the skill level to an orderer terminal.

### Description of Embodiment

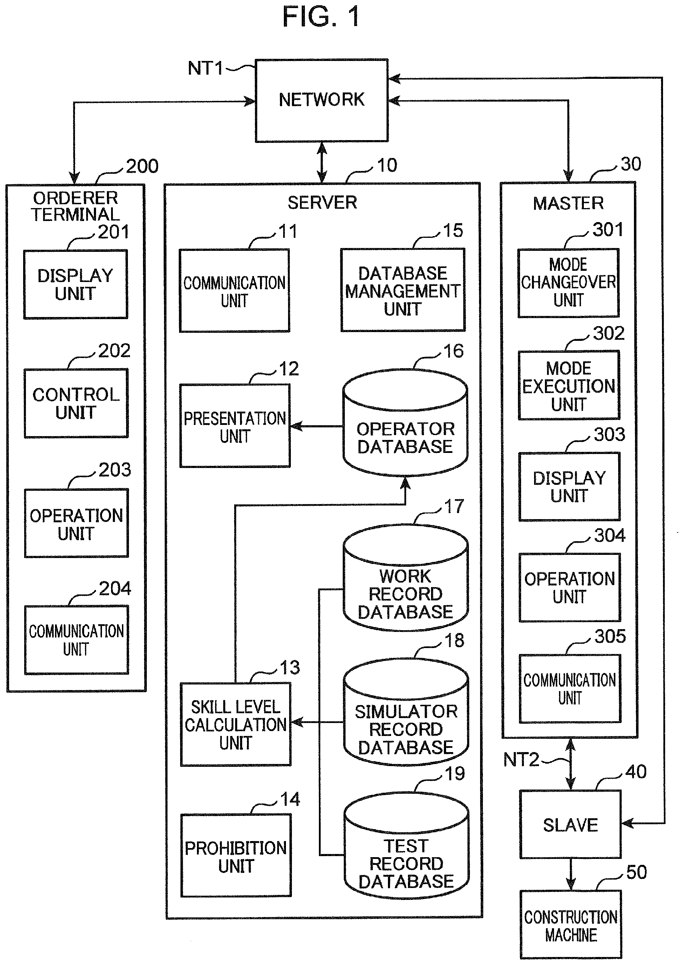

FIG. 1 is a block diagram showing an overall configuration of a skill evaluation system according to an embodiment of the present invention. The skill evaluation system includes a server 10, an orderer terminal 200, and a master 30. The orderer terminal 200 is a device for a work orderer to order work to an operator of the master 30. The server 10 is a device that evaluates a skill of the operator from a work history of a remote operation of the master 30 by the operator.

The master 30 is one example of a remote operation device that remotely operates a construction machine 50. In the present embodiment, the master 30 includes an operation device simulating a cab of the construction machine 50. An operation lever similar to an operation lever of the construction machine 50 is disposed at a position similar to a position in the construction machine 50. In addition, the master 30 includes a seat on which the operator is seated, a display unit 303 disposed forward of the seat and displaying a surrounding image of the construction machine 50, and the like. The operator operates the operation lever to remotely operate the construction machine 50 while looking at the surrounding image displayed on the display unit 303.

A slave 40 is a slave operation device that is disposed in the cab of the construction machine 50 and directly operates the operation lever provided in the cab of the construction machine 50 based on an operation amount received by the master 30. The slave 40 is, so to speak, a machine that operates the construction machine 50 as an operator's dummy. The construction machine 50 is a construction machine to be remotely operated, such as a hydraulic excavator and a hydraulic crane.

The server 10, the orderer terminal 200, the master 30, and the slave 40 are connected via a network NT1 to allow communication with each other. As the network NT1, a long distance communication network including the Internet, a mobile phone communication network, and the like can be employed.

The master 30 and the slave 40 are connected via a communication path NT2 to allow communication with each other. As the communication path NT2, a communication path is employed that allows wireless communication between the master 30 and the slave 40 at a distance of several tens to several hundreds of meters, such as specific power-saving radio and Bluetooth (registered trademark). However, this is one example, and the master 30 and the slave 40 may be connected via the network NT1. In this case, the master 30 and the slave 40 can perform long-distance communication. Alternatively, wired communication may be employed as the communication path NT2.

The master 30 includes a mode changeover unit 301, a mode execution unit 302, the display unit 303, an operation unit 304, and a communication unit 305.

The mode changeover unit 301 includes, for example, a physical changeover switch or a changeover switch configured as a GUI displayed on the display unit 303. The mode changeover unit 301 receives a changeover instruction by the operator to make a changeover among an actual work mode, a simulation mode, and a test mode. The actual work mode is a mode in which the operator actually operates the construction machine 50 remotely. The simulation mode is a mode in which the operator executes a simulator for training a remote operation. The test mode is a mode for executing a predetermined test for ensuring that the skill level of the operator for the remote operation is equal to or higher than a certain level.

The mode execution unit 302 includes, for example, a processor such as a CPU, and executes the mode received by the mode changeover unit 301.

When executing the actual work mode, the mode execution unit 302 requests the operator to input an access code, performs authentication processing using the input access code, and then permits the remote operation by the operator when the authentication is permitted. On the other hand, when the authentication is not permitted, the remote operation by the operator is not permitted. Here, the master 30 and the slave 40 each store the access code in a memory (not shown). When the input access code agrees with the access code stored in the memory, the mode execution unit 302 transmits the access code to the slave 40 via the communication unit 305. When the transmitted access code agrees with the access code stored in the memory, the slave 40 transmits a permission response to the master 30. When the permission response is received by the communication unit 305, the mode execution unit 302 causes the communication unit 305 to establish a communication connection with the slave 40. After this, every time the operator inputs an operation into the operation unit 304, the mode execution unit 302 transmits the input operation amount to the slave 40 via the communication unit 305 to operate the slave 40. This allows the operator to operate the master 30 and remotely operate the construction machine 50.

When the actual work ends, the mode execution unit 302 transmits an actual work record that associates work contents, work time, and specifications of the construction machine 50 used for the actual work as the work history to the server 10 via the communication unit 305. Here, the server 10 stores work schedule information for managing which operator remotely operates which construction machine 50 at which work site in which time zone. Therefore, the mode execution unit 302 may identify the work content of the actual work, for example, by transmitting an inquiry notification of the work content to the server 10 via the communication unit 305 by designating the time zone and an operator ID, and receiving the work content from the server 10.

The work content such as digging, loading, and leveling of level ground performed by the construction machine 50 is repeated in a certain operation pattern, making it possible to identify the work content from the operation pattern for the operation unit 304. Therefore, the mode execution unit 302 may identify the work content from the operation pattern input by the operation unit 304. Also, the mode execution unit 302 may identify the work time from the execution time of the actual work mode.

When executing the simulation mode, the mode execution unit 302 activates a simulator including a computer program. Here, the simulator is executed by the operator, for example, for the purpose of improving the skill level of the remote operation.

The simulator constructs a virtual site environment including a three-dimensional model simulating the actual work site in computer space, and disposes a construction machine model simulating the actual construction machine in the virtual site environment. Then, the simulator generates an image of the virtual site environment the operator can see through the cab when the operator is seated in the cab of the construction machine model, and displays the image on the display unit 303 of the master 30. Here, when the operator operates the operation unit 304 of the master 30, the simulator changes the posture of an attachment, a tip attachment, and the upper slewing body of the construction machine model in accordance with the operation, and also changes the image of the virtual site environment in response to the change. Also, the simulator implements the work content such as digging and loading in response to the operation of the operation lever by the operator in the virtual site environment, in a similar manner to the actual work site.

The simulator, when activated, causes the operator to select the specification and the work content of the construction machine 50, causes the operator to implement the selected work content in the virtual site environment by using the construction machine model of the selected specification, thereby training the operator. When the training by the simulator ends, the mode execution unit 302 transmits a simulation record associated with the work content, the work time of the simulator, and the specification of the construction machine 50 used by the simulator as the work history to the server 10 via a communication unit 11.

When executing the test mode, the mode execution unit 302 starts the test by activating a test application including a computer program. Here, the test is, for example, a test provided by a provider of the skill evaluation system. The test is implemented, for example, by causing the operator to operate the actual construction machine 50 disposed at an actual training site by using the master 30.

For example, when the operator operates the master 30 to activate the test application, and inputs a test request to carry out the test regarding the desired work content by using the construction machine 50 of the desired specification, the test request is transmitted to the server 10. The server 10 that has received the test request causes the slave 40 mounted on the construction machine 50 of the specification desired by the operator at the training site to have communication connection with the master 30, and puts the predetermined construction machine 50 into a state remotely controllable by the master 30, and then starts the test. Pass or fail of this test is determined, for example, by an examiner remotely or directly visually observing the work actually performed by a remote operation at the training site. Then, when pass or fail is determined by the examiner, the pass or fail result is transmitted from an examiner terminal to the master 30. When the communication unit 305 receives the pass or fail result of the test, the mode execution unit 302 transmits the test result that associates the received pass or fail result, the work content, and the specification of the construction machine 50 used in the test as the work history to the server 10 via the communication unit 305.

The display unit 303 includes a display device such as a liquid crystal display, and displays the surrounding image of the construction machine 50. The operation unit 304 includes an operation lever similar to the operation lever provided in the cab of the construction machine 50. Specifically, the operation unit 304 includes one or more operation levers that can tilt in the front-rear direction and/or the left-right direction. When the operator tilts a certain operation lever, the operation amount according to the tilt amount is transmitted to the slave 40 via the communication path NT2. The slave 40 tilts the operation lever of the construction machine 50 corresponding to the operation lever tilted by the operator according to the operation amount.

The communication unit 305 includes a communication device for connecting the master 30 to the network NT1 and the communication path NT2.

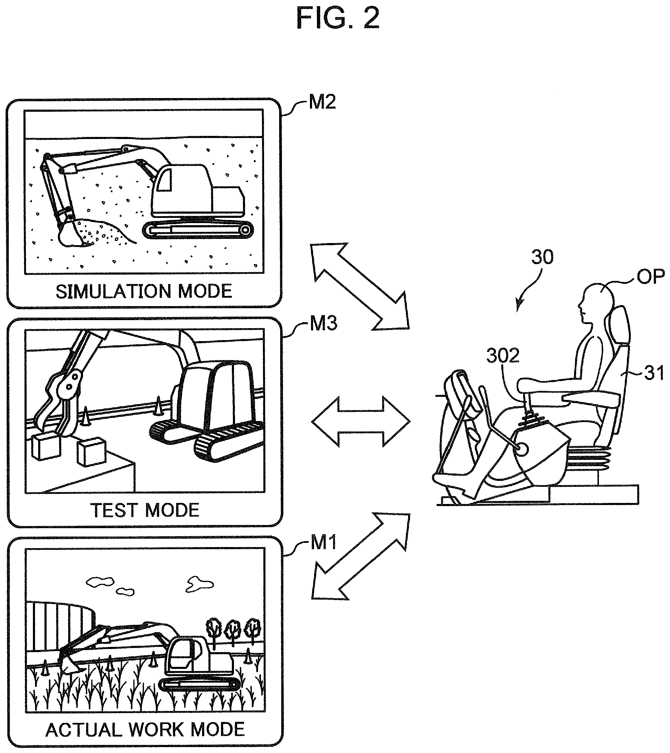

FIG. 2 is a view showing an outline of the skill evaluation system according to the present embodiment. An operator OP is seated on a seat 31, and can arbitrarily make a changeover in any of an actual work mode M1, a simulation mode M2, and a test mode M3 by inputting a changeover instruction for making a changeover in the operation mode of the master 30. For example, the operator OP with little experience and a low skill level, who receives few requests for actual work, selects the simulation mode M2 and has training for the remote operation by using the simulator. Then, when the operator OP gains some confidence in the remote operation, the operator OP selects the test mode M3 and takes the test. If the test is passed, the skill level will improve further. In this way, as the operator OP has training for the remote operation, the skill level gradually improves accordingly, and the request for actual work from the work orderer also gradually increases. With this arrangement, the skill evaluation system can cause the operator OP to have training for the remote operation while giving the operator OP the feeling that the operator OP is playing a game, such as the feeling that as the operator OP has more experience, the level of the operator OP will improve. This makes it possible to efficiently develop younger generation operators and expand the range of operators, and to solve the labor shortage in the construction industry.

Reference is returned to FIG. 1. The server 10 includes a computer having a processor such as a CPU, a memory, and a communication function. The server 10 includes the communication unit 11 (one example of acquisition unit), a presentation unit 12, a skill level calculation unit 13, a prohibition unit 14, a database management unit 15, an operator database 16, a work record database 17, a simulator record database 18, and a test record database 19. The various databases shown in FIG. 1 are stored in a memory of the server 10. In FIG. 1, the presentation unit 12 to the database management unit 15 are implemented by, for example, the CPU executing a program.

The communication unit 11 includes, for example, a communication device that connects the server 10 to the network NT1, and receives the work history (actual work record, simulation record, and test result) from the master 30.

When an inquiry request for inquiring the skill level of one operator is transmitted from the orderer terminal 200, the presentation unit 12 reads the skill level of the operator concerned from the operator database 16 and transmits the skill level to the orderer terminal 200 via the communication unit 11. When the skill level is calculated by the skill level calculation unit 13 based on the work history transmitted from the master 30, the presentation unit 12 transmits the skill level to the master 30 via the communication unit 11.

When the communication unit 11 receives the work history from the master 30, the database management unit 15 stores the work history in either of the work record database 17, the simulator record database 18, and the test record database 19. The work record database 17, the simulator record database 18, and the test record database 19 are one example of the work history database.

Here, when the received work history is the actual work record (one example of operation record), the database management unit 15 stores the work history in the work record database 17. When the received work history is the simulation record (one example of operation record), the database management unit 15 stores the work history in the simulator record database 18. When the received work history is the test result, the database management unit 15 stores the test result in the test record database 19.

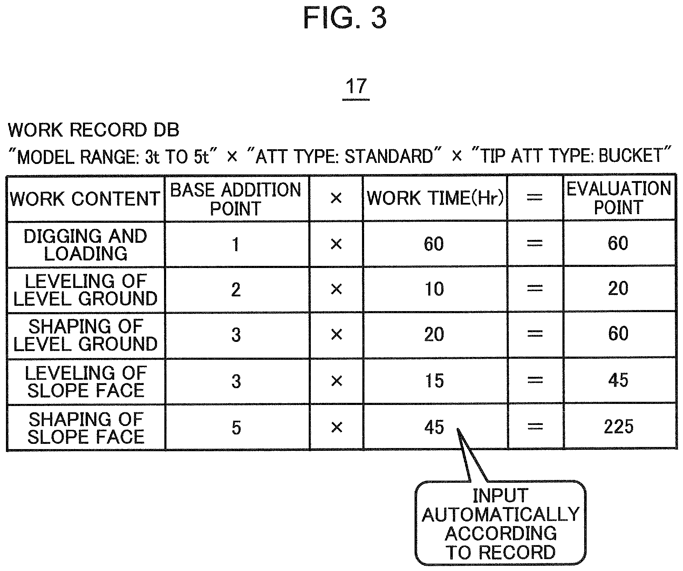

FIG. 3 is a diagram showing a configuration of the work record database 17. The work record database 17 is a database created for each specification of the construction machine 50 for each of the operators entered in the server 10, and is a database that stores the actual work records of the operator for each specification as the work history.

The work record database 17 has columns of "work content", "base addition point", "work time", and "evaluation point".

In the "work content" column, work contents with work records for the operator concerned are registered. Here, five work contents are registered: "digging and loading", "leveling of level ground", "shaping of level ground", "leveling of slope face", and "shaping of slope face".

"Digging and loading" is a work content for digging soil, ground, and rock and loading on a dump truck. "Leveling of level ground" is a work content for leveling the level ground shaped by "shaping of level ground". "Shaping of level ground" is a work content for removing irregularities on the ground to create a flat ground. "Leveling of slope face" is a work content for leveling the slope face shaped by "shaping of slope face". "Shaping of slope face" is a work content for shaping the slope face, which is an artificial slope created by cutting or embankment. Note that the work contents listed in FIG. 3 are only one example, and other work contents may be included.

The "base addition point" is a predetermined coefficient by which the work time input into the "work time" column is multiplied. Here, the value of base addition point is set such that as the work content becomes more difficult, the base addition point becomes higher.

"Work time" is a cumulative value of the work time for each work content in which the operator has actually operated the construction machine 50 remotely. The work time is registered in a record concerned by the database management unit 15 every time the actual work record is transmitted from the master 30. For example, if the master 30 transmits the actual work record in which two-hour work time is associated with "digging and loading", two hours will be added to the "digging and loading" work time.

"Evaluation point" is a numerical value represented by the product of the base addition point and work time in each work content. Since the skill level becomes higher as the evaluation point becomes higher, the work orderer orders a lot of work to the operator.

Here, the work record database 17 is present for each specification of the construction machine 50 configured by a combination of "model range", "ATT type", and "tip ATT". The example of FIG. 3 shows the work record database 17 in the specification "model range" is "3t to t5", "ATT type" is "standard", and "tip ATT type" is "bucket". Note that if the operator concerned has a work record for a specification other than "model range" of "3t to t5", "ATT type" of "standard" and "tip ATT type" of "bucket", the work record database 17 for that specification is also created. Here, the "work record" is a record of work ordered by the work orderer, and is a record of remotely operating the construction machine 50 at the actual work site.

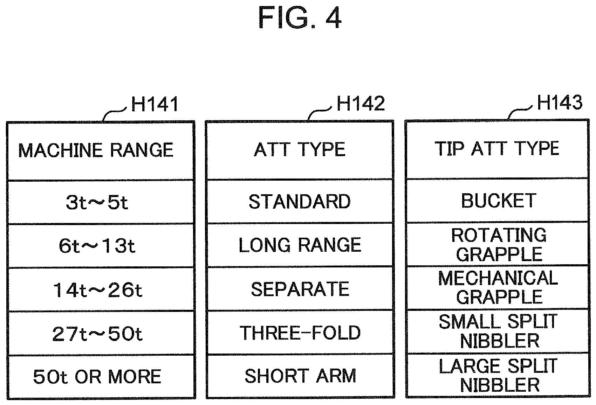

FIG. 4 is a table summarizing a machine range, ATT type, and tip ATT type. As shown in Table H141, in the present embodiment, the machine range is classified into five types: "3t to 5t", "6t to 13t",..., and "50t or more". As shown in Table H142, in the present embodiment, the ATT type is classified into five types: "standard", "long range", "separate", "three-fold", and "short arm". As shown in Table H143, in the present embodiment, the tip ATT type is classified into five types: "bucket", "rotating grapple", "mechanical grapple", "small split nibbler", and "large split nibbler".

For example, if one operator has a work record of a combination of "3t to 5t", "standard", and "bucket" for the machine range, ATT type, and tip ATT type, and has a work record of another combination of "3t to 5t", "long range", and "bucket", respectively, two work record databases 17 are present corresponding to these two combinations.

Note that in FIG. 3, five work contents regarding civil engineering work from "digging and loading" to "shaping of slope face" are registered. This is because the operator has a work record of these work contents. For example, if the operator has a work record of demolition work, the work content for demolition work is also registered. In this way, the work content having a work record and the cumulative value of the actual work time for the work content are registered in association with each other in the work record database 17.

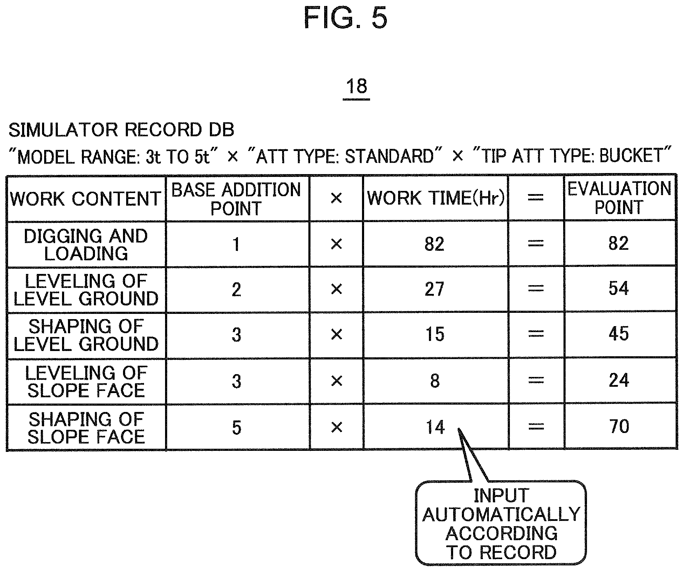

FIG. 5 is a diagram showing a configuration of the simulator record database 18. The simulator record database 18 is a database that is created for each specification and each operator who has entered the server 10, and is a database that stores the simulation record of the operator as the work history. The simulator record database 18 has columns of "work content", "base addition point", "work time", and "evaluation point". In the "work content" column, the work content for which the operator has training with the simulator is registered. In the "work time" column, the cumulative value of the work time when the operator has training with the simulator for each work content is registered. The work time is registered in the record concerned by the database management unit 15 every time the simulation record is transmitted from the master 30. For example, if the master 30 transmits the simulation record in which two-hour work time is associated with "digging and loading", two hours will be added to the "digging and loading" work time. The "base addition point" and the "evaluation point" are the same as described in FIG. 3.

Note that in a similar manner to the work record database 17, one database is created for each specification of the construction machine 50 in the simulator record database 18. The example of FIG. 5 shows the simulator record database 18 in the specification that "model range" is "3t to t5", "ATT type" is "standard", and "tip ATT type" is "bucket" in a similar manner to FIG. 3.

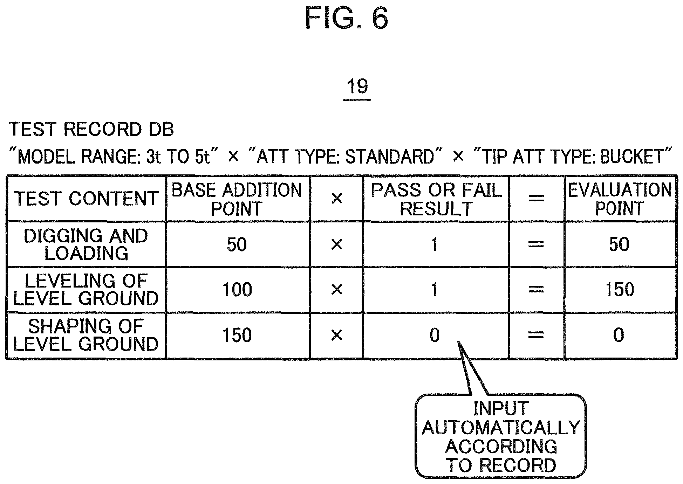

FIG. 6 is a diagram showing a configuration of the test record database 19. The test record database 19 is a database created for each specification of the construction machine 50 and for each of the operators entered in the server 10, and is a database that stores the test result of the operator for each specification as the work history.

The test record database 19 has columns of "test content", "base addition point", "pass or fail result", and "evaluation point". In the "test content" column, the work content for which the test is performed is registered. Here, since the operator concerned has taken the test for three work contents of "digging and loading", "shaping of level ground", and "shaping of slope face", these three work contents are registered in the "test content" column. In the "pass or fail result" column, the pass or fail result for the test is registered. When passed, " 1" is registered, and when failed, "0" is registered. The "base addition point" and the "evaluation point" are the same as described in FIG. 3. However, regarding the base addition point, in order to match the scale with the evaluation points of the work record database 17 shown in FIG. 3 and the simulator record database 18 shown in FIG. 5, values of 50 times the evaluation points in FIGS. 3 and 5 are set.

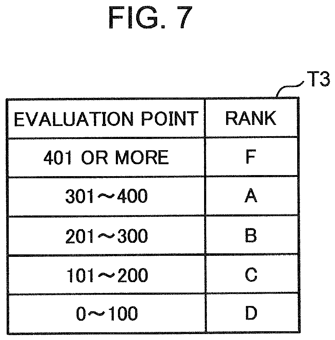

Reference is returned to FIG. 1. Every time the work record database 17, the simulator record database 18, and the test record database 19 are updated, the skill level calculation unit 13 calculates the evaluation point for each work content by multiplying the work time by the base addition point, and registers the evaluation point in the "evaluation point" column of the database concerned. Then, the skill level calculation unit 13 calculates the total value of the evaluation point for each combination of the specification and the work content, and determines the rank of skill level of the operator concerned for each work content and specification with reference to a rank determination table T3 shown in FIG. 7. The determined rank of skill level is registered in the operator database 16.

FIG. 7 is a diagram showing one example of the rank determination table T3. The rank determination table T3 is registered in advance in a memory of the server 10 and has columns of "evaluation point" and "rank". In the example of FIG. 7, the rank is classified into five ranks of F, A, B, C, and D in descending order of the skill level. Therefore, F to D are sequentially registered in the "rank" column of the rank determination table T3. The range of evaluation point for each rank from F to D is registered in the "evaluation point" column.

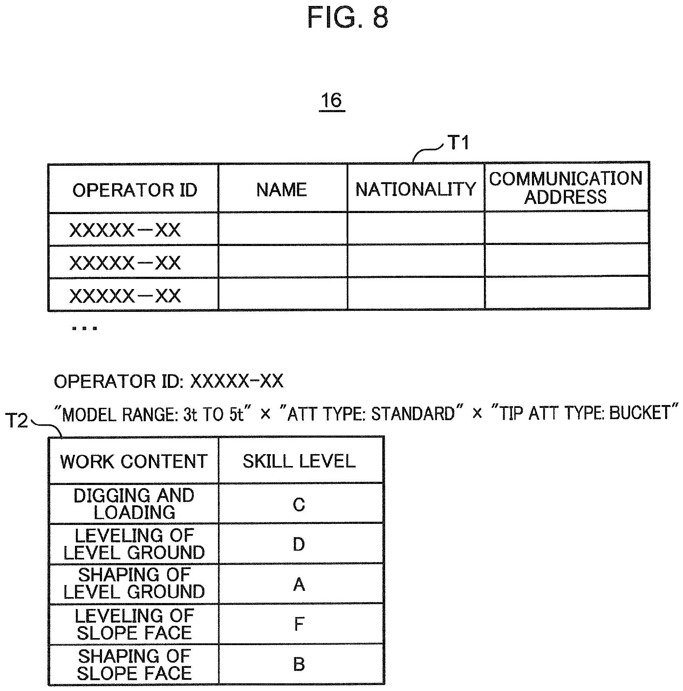

Next, an example of calculating the skill level will be described. Regarding the specification "model range: 3t to 5t, ATT type: standard, tip ATT type: bucket" and the work content "digging and loading", in the work record database 17 shown in FIG. 3, the evaluation point is "60", in the simulator record database 18 shown in FIG. 5, the evaluation point is "82", and in the test record database 19 shown in FIG. 6, the evaluation point is "50". Therefore, 192 (= 60 + 82 + 50) is the total value of evaluation point of the operator concerned for the specification "model range: 3t to 5t, ATT type: standard, tip ATT type: bucket" and the work content "digging and loading". With reference to the rank determination table T3, since the rank of this total value "192" is "C", the rank of the skill level of this operator for the specification "model range: 3t-5t, ATT type: standard, tip ATT type: bucket" and the work content "digging and loading" is "C". Therefore, "C" is registered as the "skill level" for the "digging and loading" in the skill level table T2 shown in FIG. 8.

In this way, the skill level calculation unit 13 calculates the skill level of each operator for each specification and work content, and registers the skill level in the skill level table T2.

FIG. 8 is a diagram showing a configuration of the operator database 16. The operator database 16 includes an operator table T1 and a skill level table T2. The operator table T1 is a table in which personal information of the operator who has previously entered the server 10 is registered. The skill level table T2 is a table in which the skill level of each entered operator for each specification and work content is registered.

In detail, the operator table T1 has columns of "operator ID", "name", "nationality", and "communication address". The "operator ID" is an identifier for uniquely identifying each entered operator. The "name" indicates the name of the operator. The "nationality" indicates the nationality in which the operator lives, such as Japan or Germany. The "communication address" indicates a communication address of the master 30 used by the operator.

The skill level table T2 is a database created for each entered operator and each specification. The example of FIG. 8 shows the skill level table T2 of one operator for the specification "model range: 3t to 5t, ATT type: standard, tip ATT type: bucket".

The skill level table T2 has columns of "work content" and "skill level". In the example of FIG. 8, the skill levels for five work contents are registered: digging and loading, leveling of level ground, shaping of level ground, leveling of slope face, and shaping of slope face. This is because the skill levels of the operator for these five work contents are calculated by the skill level calculation unit 13 for the specification "model range: 3t-5t, ATT type: standard, tip ATT type: bucket". If the skill level for another work content has been calculated for this specification, the skill level is also registered in the skill level table T2. In addition, if the skill level is calculated for another specification other than the specification "model range: 3t to 5t, ATT type: standard, tip ATT type: bucket", the skill level table T2 for the specification is created.

Reference is returned to FIG. 1. The prohibition unit 14 prohibits the operator from executing the actual work mode when the skill level is lower than a reference level. In the present embodiment, it is determined for each specification and work content whether the skill level is equal to or lower than the reference level. For example, it is assumed that the reference level is set at C. In the example of FIG. 8, since the skill level of digging and loading is "C", the operator is permitted to use the actual work mode for the specification "model range: 3t-5t, ATT type: standard, tip ATT type: bucket" and the work content "digging and loading". That is, the operator can actually operate the construction machine 50 remotely to obtain a reward for this use and work content.

Meanwhile, this operator, who has the skill level of "D" for leveling of level ground, cannot use the actual work mode for leveling of level ground.

Specifically, when one operator is permitted to use the actual work mode, the prohibition unit 14 sets a permission flag of the operator stored in the memory of the master 30 at 1. For example, it is assumed that one operator is permitted to use the actual work mode for the specification "model range: 3t to 5t, ATT type: standard, tip ATT type: bucket" and the work content "digging and loading". In this case, the prohibition unit 14 sets the permission flag stored in the memory of the master 30 of the operator concerned from "0" to " 1", the permission flag for the specification "model range:3t-5t, ATT type: standard, tip ATT type: bucket" and the work content "digging and loading". In this case, when the operator selects the actual work mode in the master 30 and requests execution of the actual work for this specification and this work content, the mode execution unit 302 of the master 30 permits this request. Meanwhile, the setting flag for the specification and the work content for which the operator concerned is not permitted is set at "0". In this case, when the operator selects the actual work mode in the master 30 and requests execution of the actual work for the specification and the work content for which the permission flag is 0, the mode execution unit 302 rejects the request.

This makes it possible to give the operator a motivation to improve the skill level by gaining a lot of experience with the simulator or to pass the test and improve the skill level to receive many orders and increase the reward.

The orderer terminal 200 includes a computer such as a personal computer possessed by the work orderer who orders work to the operator. Here, the work orderer is a person who plans work such as construction work and places an order with the operator, and is, for example, an employee who belongs to a work ordering company. The operator may be an employee employed by a work contracting company or a private manager who is not directly employed by a work contracting company.

The orderer terminal 200 includes a display unit 201, a control unit 202, an operation unit 203, and a communication unit 204. The display unit 201 includes, for example, a liquid crystal display. The control unit 202 includes, for example, a processor such as a CPU, and manages the overall control of the orderer terminal 200. In the present embodiment, on receipt of an input instruction of the inquiry request that is input by the work orderer to check the skill level of the operator, the control unit 202 transmits the inquiry request including the operator ID of the operator concerned to the server 10 via the communication unit 204.

The operation unit 203 is, for example, a keyboard and a mouse, and receives the input instruction of the inquiry request for checking the skill level. The communication unit 204 includes a communication device that connects the orderer terminal 200 to the network NT1, and transmits the inquiry request received by the operation unit 203 to the server 10 via the network NT1.

One example of interaction between the work orderer and the operator will be shown below. To begin with, when the work orderer inputs the work schedule information including the work content, the work time, and the specification of the construction machine 50 used for the work, the orderer terminal 200 transmits the work schedule information to the server 10. From details of the work schedule information, the server 10 transmits an operator list obtained by picking up operator candidates to the orderer terminal 200. The operator list includes a button for the work orderer to view the work level. When the work orderer selects this viewing button, the orderer terminal 200 transmits the inquiry request described above to the server 10. The server 10 reads the skill level of the operator concerned from the operator database 16 and transmits the skill level to the orderer terminal 200. This allows the work orderer to determine the skill level of the operator attracting interest from among operators listed in the operator list. In this way, the work orderer determines the operator whom the work orderer finally requests to perform the work while checking the skill levels of the operators listed in the operator list. The orderer terminal 200 transmits, to the server 10, an order request to the operator determined by the work orderer.

The server 10 notifies the operator concerned that the order request has been made. When the operator accepts the order request, the server 10 considers that a contract is concluded between the operator and the work orderer, issues the access code to the master 30, and transmits the access code to the master 30 of the operator concerned. This allows the operator to operate the master 30 and execute the work ordered from the work orderer.

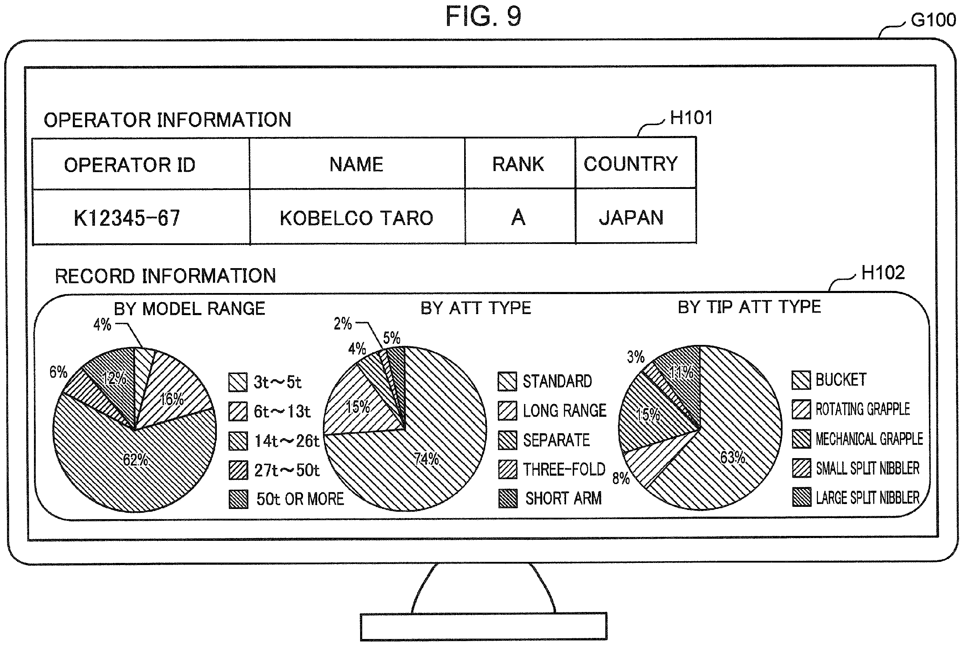

FIG. 9 is a view showing a detailed screen G100 for the operator. The detailed screen G100 is a screen displayed on the orderer terminal 200, and is a screen displayed when the work orderer selects a detail button in the operator list. The detailed screen G100 includes a display column H101 for the personal information of the operator and a display column H102 for record information indicating the work record of the operator. The display column H101 displays the selected operator's operator ID, name, rank indicating the skill level, and the country where the operator lives. The display column H102 displays a breakdown of the work record for each of model range, ATT type, and tip ATT type in a pie chart. In this way, displaying the record information allows the work orderer to easily determine what kind of work the operator is good at. Note that the skill level shown in FIG. 9 indicates a representative value of the skill level of the operator (for example, a value obtained by ranking the average value of all evaluation points). However, this is one example, and the detailed screen G100 may display the skill level for each specification and work content.

Note that in the description here, the work orderer is notified of the skill level of the operator with the selection of the detail button displayed in the operator list serving as a trigger, but this is one example. For example, the operator list may display the skill level of each operator in advance.

As a mode in which the server 10 picks up the operator when the work schedule information is received, for example, it is possible to employ a mode of picking up an operator whose skill level for the specification and work content included in the work schedule information is equal to or higher than a reference skill level.

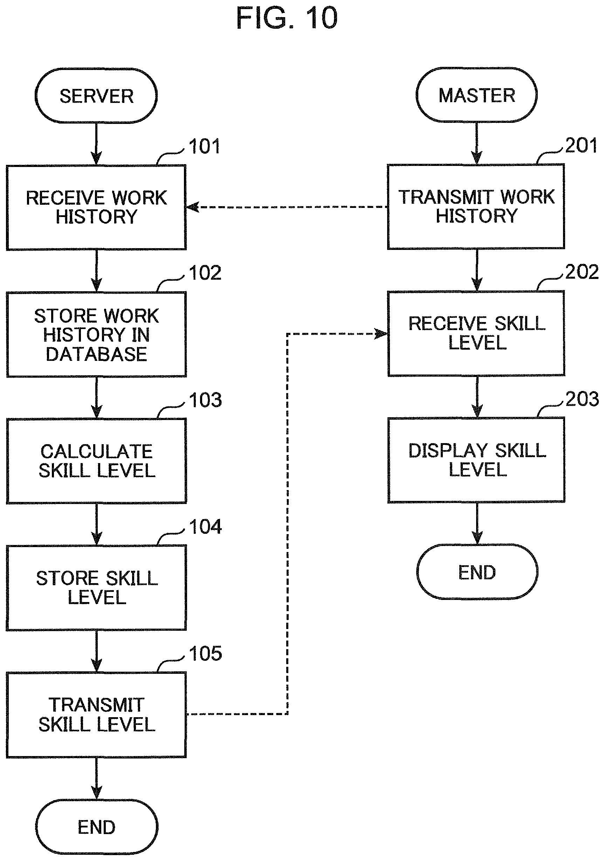

FIG. 10 is a flowchart showing processing when the skill evaluation system according to the present embodiment calculates the skill level.

In S201, in the master 30, when the mode execution unit 302 detects that one of the actual work mode, the simulation mode, and the test mode has ended, the communication unit 305 transmits, to the server 10, the work history that associates the specification of the construction machine 50, the work content, and the work time or test result in the detected mode.

In S101, the communication unit 204 of the server 10 receives the work history. In S102, in the server 10, the database management unit 15 stores the work history received by the communication unit 204 in either one of the work record database 17, the simulator record database 18, and the test record database 19.

In S103, the skill level calculation unit 13 calculates the skill level by using details of the updated database. In S104, the calculated skill level is stored in the operator database 16. In S105, the communication unit 11 transmits the calculated skill level to the master 30.

In S202, the communication unit 305 of the master 30 receives the skill level. In S203, the display unit 303 of the master 30 displays the skill level. This allows the operator to check how much the skill level of the operator has improved.

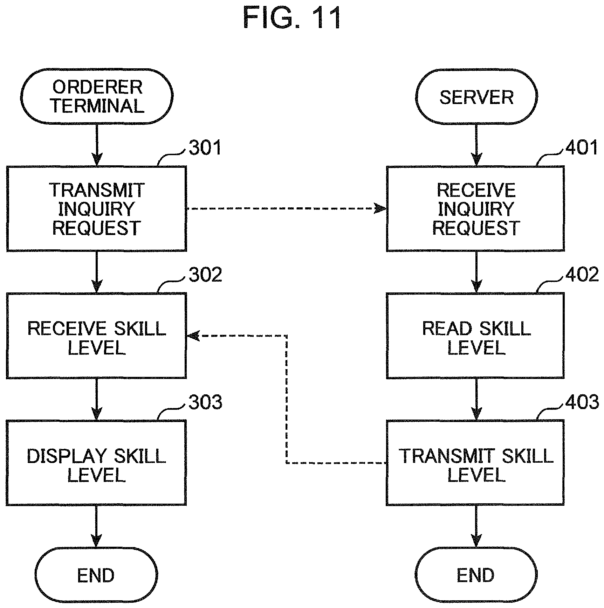

FIG. 11 is a flowchart showing processing when the skill evaluation system in the present embodiment transmits the skill level to the orderer terminal. In S301, in the orderer terminal 200, when the operation unit 203 receives the input instruction of the inquiry request for checking the skill level of one operator from the work orderer, the communication unit 204 transmits the inquiry request to the server 10. Here, the inquiry request includes the operator ID of the operator concerned.

In S401, the communication unit 11 of the server 10 receives the inquiry request. In S402, the presentation unit 12 of the server 10 reads the skill level of the operator concerned from the operator database 16. In S403, the communication unit 11 of the server 10 transmits the skill level to the orderer terminal 200. In S302, the communication unit 204 of the orderer terminal 200 receives the skill level. In S303, the display unit 201 of the orderer terminal 200 displays the skill level. This allows the work orderer to order the work to the operator who attracts interest after checking the skill level of the operator.

In this way, according to the present embodiment, the actual work record in the actual work mode, the simulation record in the simulation mode, and the test result in the test mode are stored in the database, and the skill level of the operator is calculated based on the work history. Therefore, an objective evaluation indicator about the remote operation of the operator can be presented. As a result, a selection material for selecting the operator can be presented to the work orderer. This allows the work orderer to select a new operator without anxiety, and to revitalize the labor market of the remote operation system.

The operator can improve the skill level by not only the actual work but also having training with the simulator or taking the test. This makes it possible to give the operator a motivation to improve the skill level by taking the simulator and the test using free time of the actual work, and to improve the overall skill level of the operator.

Since the master 30 is configured to allow a changeover among the actual work mode, the simulation mode, and the test mode, the operator can easily perform the simulation and the test.

The present invention can employ the following modifications.
(1) In the above embodiment, the skill level of the operator increases as the work time increases in the actual work mode and the simulation mode, but the present invention is not limited thereto. For example, the skill level of the operator may be calculated in consideration of the work quality in the actual work mode and the simulation mode.

For example, a questionnaire may be issued to the work orderer after finishing the actual work, the evaluation point of the operator may be calculated from the questionnaire result, and the skill level may be calculated based on the evaluation point. As the questionnaire, a mode of causing the work orderer to grade the operator can be employed, for example, 5 points if very satisfied with the operator's work, 4 points if satisfied, 3 points if neutral, 2 points if not satisfied, and 1 point if not satisfied at all. Then, the grading result of this questionnaire may be employed as the evaluation point.

In the simulation mode, a method of determining the skill level may be employed in which similarity indicating how close the motion locus of the construction machine 50 of the operator is to the model locus is calculated, and as the similarity is increased, the evaluation point is increased. This method of calculating the similarity may be used in calculating the evaluation point of the actual work.

(2) In the above embodiment, the skill level of the operator is calculated for each specification and work content, but the present invention is not limited thereto. For example, the skill level calculation unit 13 may calculate the work level by summing, for each specification, the evaluation point calculated for each work content to calculate the total value for each specification, and ranking the calculated total value according to the rank determination table T3.

Alternatively, the skill level calculation unit 13 may calculate the work level by calculating the total value of the evaluation points of all the specifications and all the work contents and ranking the calculated total value according to the rank determination table T3.

(3) The above embodiment has described that operators whose skill level is equal to or higher than the reference skill level are included in the operator list and presented to the work orderer. However, the present invention is not limited thereto. For example, the server 10 may calculate a required skill level according to the work schedule information created by the work orderer, and may include the operator having the skill level equal to or higher than the required skill level in the operator list. For example, if the work schedule information includes five hours as the work time for digging and loading, the server 10 determines which of the ranks of the predetermined required skill level the five hours correspond to. Here, for example, if the rank of the required skill level is A, the server 10 may extract the operator whose skill level is A or higher from among the entered operators and include the operator in the operator list.

(4) The rank determination table T3 shown in FIG. 7 defines the rank of 5 steps, but this rank may be 4 steps or less, or 6 steps or more.

(5) The above embodiment has described one example of operation record including the actual work record and the simulation record. However, an example not covered by the claims is that the operation record may include at least one of the actual work record and the simulation record. Here, if only the actual work record is employed as the operation record, the simulator record database 18 may be omitted from the server 10. If only the simulation record is employed as the operation record, the work record database 17 may be omitted from the server 10.

(6) The above embodiment has described that in the simulation mode, the operator operates the construction machine model disposed in computer space. However, in an example not covered by the claims, the operator may operate the actual construction machine 50.

(7) The above embodiment has described that in the test mode, the operator takes the test by operating the actual construction machine 50, but the present invention is not limited thereto. For example, in the test mode, the test may be performed by operating a construction machine model disposed in computer space. In this case, a pass or fail result of the test may be determined by the simulator. This allows employment of a mode in which the operator desires the actual work on condition that the skill level on the simulation is equal to or higher than a certain level. Note that if the mode of performing the test in the simulator is employed, the pass or fail result of the test may be stored in the simulator record database 18 or in the test record database 19.

(8) The above embodiment has described that the mode execution unit 302 of the master 30 can execute all of the actual work mode, the simulation mode, and the test mode. However, an example not covered by the claims is that the mode execution unit 302 may be able to execute at least one of the three modes. For example, the following use case can be assumed. That is, in one office, a master 30_A including the mode execution unit 302 that cannot execute the simulation mode but can execute the actual work mode and the test mode is installed. In another office, a master 30_B including the mode execution unit 302 that can execute only the simulation mode is installed.

In this case, the master 30_A transmits the actual work record of the actual work performed by one operator to the server 10 in association with the operator ID, and transmits the test result performed by this operator to the server 10 in association with the operator ID. Meanwhile, the master 30_B transmits the simulation record of the simulation performed by the operator to the server 10. Then, the server 10 stores the actual work record transmitted from the master 30_Ain the work record database 17 of the operator concerned, and stores the test result transmitted from the master 30_A in the test record database 19 of the operator concerned. Meanwhile, the server 10 stores the simulator record transmitted from the master 30_B in the simulator record database 18 of the operator concerned.

In this use case provided by an example not covered by the claims, even if the operator executes various modes in an arbitrary master 30 instead of the specific master 30, the record of the executed mode will be stored in the server 10, and this will be a convenient system for the operator. Note that when employing this use case, each master 30 is required at least to perform user authentication on the operator before executing various modes by the operator.

(9) The above embodiment has described that the server 10 acquires the work history of the operator from the master 30 via the network NT1, but the present invention is not limited thereto. For example, the work history of the operator in the master 30 is stored in a recording medium such as a USB memory. Then, the server 10 may acquire the work history of the operator through this recording medium. In this case, the server 10 may acquire the work history recorded in the recording medium via a computer connected to some network NT1, or by connecting the recording medium to a memory interface of the server 10.

When the work of the operator in various modes is finished, the master 30 may display a symbol string indicating the record of the finished work (for example, a list of alphanumeric characters). Then, if the operator manually inputs this symbol string in a computer connected via the network NT1 (for example, a mobile terminal such as a smartphone) or an input device of the server 10, the records of various modes may be registered in the server 10. The symbol string indicating the record used in this case may be a QR code (registered trademark). In this case, the operator may capture the QR code (registered trademark), for example, with a mobile terminal such as a smartphone and transmit the QR code to the server 10, whereby the work record may be registered in the server 10.

(10) The above embodiment has described that the mode changeover unit 301 can select either one of three modes of the actual work mode, the simulation mode, and the test mode, which is one example. In an example not covered by the claims, if the mode execution unit 302 of the master 30 is configured, for example, to execute two of these three modes, the mode changeover unit 301 may be configured to allow a changeover in either one of these two modes. In another example not covered by the claims, if the mode execution unit 302 can execute only one mode, the mode changeover unit 301 is unnecessary.

### (Conclusion of Embodiment)

A skill evaluation system according to one aspect includes: a remote operation device configured to allow an operator to remotely operate a construction machine; and a server communicatively connected to the remote operation device. The server includes: an acquisition unit configured to acquire an operation record of the remote operation device by the operator, and a test result of a predetermined test for ensuring that a skill level of the operator for the remote operation is equal to or higher than a certain level; a work history database configured to store the operation record and the test result as a work history; a skill level calculation unit configured to calculate the skill level of the operator for the remote operation based on the work history stored in the work history database; and a presentation unit configured to present the skill level.

With this configuration, the operation record of the remote operation device and the test result of the predetermined test are stored in the work history database as the work history, and the skill level of the operator is calculated based on this work history. Therefore, an objective evaluation indicator about the remote operation of the operator can be presented. As a result, a selection material for selecting the operator can be presented to the work orderer. This allows the work orderer to select a new operator without anxiety, and to revitalize the labor market of the remote operation system.

In the above aspect, the operation record preferably includes an actual work record obtained by actually executing the remote operation of the construction machine and a simulation record obtained by executing simulation of the remote operation.

With this configuration, the operator can improve the skill level by not only the actual work but also having training with the simulator. This makes it possible to give the operator a motivation to have training with the simulator by using free time of the actual work and improve the skill level, and to improve the overall skill level of the operator.

In the above aspect, the test result is preferably a result of a predetermined test for ensuring that the skill level of the operator for at least one of the remote operation when actually executing the remote operation of the construction machine, and a remote operation on the simulation when executing the simulation of the remote operation is equal to or higher than a certain level.

With this configuration, the operator can improve the skill level by passing the test. This makes it possible to give the operator a motivation to improve the skill level by taking the test using free time of the actual work, and to improve the overall skill level of the operator.

In the above aspect, preferably, the remote operation device further includes a mode execution unit that executes at least one mode of an actual work mode of actually executing the remote operation of the construction machine, a simulation mode of executing the simulation of the remote operation, and a test mode of executing the predetermined test for ensuring that the skill level of the operator for the remote operation is equal to or higher than a certain level.

With this configuration, the operator can execute at least one mode of the actual work mode, the simulation mode, and the test mode in the remote operation device.

In the above aspect, preferably, the remote operation device further includes a mode changeover unit configured to receive a changeover instruction by the operator to make a changeover between at least two of the modes, and the mode execution unit executes the mode received by the mode changeover unit.

With this configuration, the operator can easily make a changeover between at least two modes among the actual work mode, the simulation mode, and the test mode in the remote operation device.

In the above aspect, preferably, the operation record includes a first work time in the actual work mode and a second work time in the simulation mode, the work history database stores a cumulative value of the first work time and a cumulative value of the second work time, and the skill level calculation unit calculates the skill level of the operator for the remote operation to be higher as the cumulative value of the first work time and the cumulative value of the second work time stored in the work history database increase.

With this configuration, a mechanism to increase the skill level as the work time in the actual work and the work time in the simulator increase can be constructed.

In the above aspect, preferably, the test result is a pass or fail result of the test executed in the test mode, and when the test result indicates a pass, the skill level calculation unit calculates the skill level higher than when the test result indicates a failure.

With this configuration, since passing the test can increase the skill level, it is possible to give the operator a motivation to take the test by using free time of the actual work.

In the above aspect, preferably, the remote operation includes a plurality of work contents, the mode execution unit executes the actual work mode, the simulation mode, and the test mode for each of the work contents, the work history database stores each of the cumulative value of the first work time in the actual work mode, the cumulative value of the second work time in the simulation mode, and the pass or fail result of the test executed in the test mode in association with each of the executed work contents, and the skill level calculation unit calculates the skill level for each of the work contents.

With this configuration, since the skill level is calculated for each work content, the work orderer can easily select the operator having the skill level suitable for the work content.

In the above aspect, preferably, the actual work mode, the simulation mode, and the test mode are each executable by the construction machine having a different specification, the work history database stores each of the cumulative value of the first work time in the actual work mode, the cumulative value of the second work time in the simulation mode, and the pass or fail result of the test executed in the test mode in association with the executed specification, and the skill level calculation unit calculates the skill level corresponding to the specification.

With this configuration, since the skill level corresponding to the specification is calculated, the work orderer can easily select the operator having the skill level suitable for the specification of the construction machine to be used in the work to order.

In the above aspect, preferably, the server further includes a prohibition unit configured to prohibit the operator from executing the actual work mode of actually executing the remote operation of the construction machine when the skill level is less than a reference level.

With this configuration, since the operator cannot execute the actual work unless the skill level exceeds the reference level, it is possible to give the operator a motivation to gain a lot of experience with the simulator or to pass the test.

In the above aspect, preferably, the acquisition unit acquires an inquiry request of the operator from an orderer terminal possessed by a work orderer who orders the work of the remote operation to the operator, and when the acquisition unit acquires the inquiry request, the presentation unit notifies the orderer terminal of the skill level of the operator.

With this configuration, the work orderer can determine the skill level of the operator by transmitting the inquiry request to the server.

The present invention may be the server that constitutes the skill evaluation system described above, a skill evaluation method that executes functions of the server, or a skill evaluation program for causing a computer to execute the skill evaluation method. The present invention may be a non-transitory computer-readable recording medium recording the skill evaluation program.

## Claims

1. A skill evaluation system comprising:
a remote operation device (30) configured to allow an operator to remotely operate a construction machine (50), wherein the remote operation device (30) includes a mode execution unit (302) that is configured to execute a selected mode to be selected from an actual work mode of actually executing the remote operation of the construction machine (50), a simulation mode of executing, by a construction machine model in a virtual site environment for simulating an operation of the construction machine (50), a simulation of the remote operation of the construction machine (50), and a test mode of executing a predetermined test by actually executing the remote operation of the construction machine (50) or by executing the simulation of the remote operation of the construction machine (50); and
a server (10) communicatively connected to the remote operation device (30),
wherein the server (10) includes:
an acquisition unit (11) configured to acquire an operation record of the remote operation device (30) by the operator in the actual work mode and the simulation mode, and a test result of the predetermined test for ensuring that a skill level of the operator for the remote operation is equal to or higher than a certain level, wherein the operation record includes an actual work record obtained by actually executing the remote operation of the construction machine and a simulation record obtained by executing the simulation of the remote operation of the construction machine;
a work history database (17, 18, 19) configured to store the operation record and the test result as a work history;
a skill level calculation unit (13) configured to calculate the skill level of the operator for the remote operation based on the work history stored in the work history database (17, 18, 19); and
a presentation unit (12) configured to present the skill level.

2. The skill evaluation system according to claim 1, wherein the test result is a result of a predetermined test for ensuring that the skill level of the operator for at least one of the remote operation when actually executing the remote operation of the construction machine (50), and a remote operation on the simulation when executing the simulation of the remote operation is equal to or higher than a certain level.

3. The skill evaluation system according to claim 1, wherein
the remote operation device (30) further includes a mode changeover unit (301) configured to receive a changeover instruction by the operator to make a changeover between at least two of the modes for selecting the selected mode, and
the mode execution unit (302) executes the mode received by the mode changeover unit (301).

4. The skill evaluation system according to any of claims 1 to 3, wherein
the operation record includes a first work time in the actual work mode and a second work time in the simulation mode,
the work history database (17, 18, 19) stores a cumulative value of the first work time and a cumulative value of the second work time, and
the skill level calculation unit (13) calculates the skill level of the operator for the remote operation to be higher as the cumulative value of the first work time and the cumulative value of the second work time stored in the work history database (17, 18, 19) increase.

5. The skill evaluation system according to any one of claims 1 to 4, wherein
the test result is a pass or fail result of the test executed in the test mode, and
when the test result indicates a pass, the skill level calculation unit (13) calculates the skill level higher than when the test result indicates a failure.

6. The skill evaluation system according to any one of claims 1 to 5, wherein
the remote operation includes a plurality of work contents,
the mode execution unit (302) executes the actual work mode, the simulation mode, and the test mode for each of the work contents,
the work history database (17, 18, 19) stores each of the cumulative value of the first work time in the actual work mode, the cumulative value of the second work time in the simulation mode, and the pass or fail result of the test executed in the test mode in association with each of the executed work contents, and
the skill level calculation unit (13) calculates the skill level for each of the work contents.

7. The skill evaluation system according to any one of claims 1 to 6, wherein
the actual work mode, the simulation mode, and the test mode are each executable by the construction machine (50) having a different specification,
the work history database (17, 18, 19) stores each of the cumulative value of the first work time in the actual work mode, the cumulative value of the second work time in the simulation mode, and the pass or fail result of the test executed in the test mode in association with the executed specification, and
the skill level calculation unit (13) calculates the skill level corresponding to the specification.

8. The skill evaluation system according to any one of claims 1 to 7, wherein the server (10) further includes a prohibition unit (14) configured to prohibit the operator from executing the actual work mode of actually executing the remote operation of the construction machine (50) when the skill level is less than a reference level.

9. The skill evaluation system according to any one of claims 1 to 8, wherein
the acquisition unit (11) acquires an inquiry request of the operator from an orderer terminal (200) possessed by a work orderer who orders the work of the remote operation to the operator, and
when the acquisition unit (11) acquires the inquiry request, the presentation unit (12) notifies the orderer terminal (200) of the skill level of the operator.

10. A skill evaluation method in a server (10) communicatively connected to a remote operation device (30) for allowing an operator to remotely operate a construction machine (50), the skill evaluation method comprising:
executing a selected mode to be selected from an actual work mode of actually executing the remote operation of the construction machine (50), a simulation mode of executing, by a construction machine model in a virtual site environment for simulating an operation of the construction machine (50), a simulation of the remote operation of the construction machine (50), and a test mode of executing a predetermined test by actually executing the remote operation of the construction machine (50) or by executing the simulation of the remote operation of the construction machine (50);
acquiring (101) an operation record of the remote operation device (30) by the operator in the actual work mode and the simulation mode, and a test result of the predetermined test for ensuring that a skill level of the operator for the remote operation is equal to or higher than a certain level, wherein the operation record includes an actual work record obtained by actually executing the remote operation of the construction machine (50) and a simulation record obtained by executing the simulation of the remote operation of the construction machine (50);
storing (102) the operation record and the test result as a work history in a work history database (17, 18, 19);
calculating (103) the skill level of the operator for the remote operation based on the work history stored in the work history database (17, 18, 19);
presenting (105) the skill level.

11. A non-transitory computer-readable recording medium recording a program for causing a computer to execute the skill evaluation method according to claim 10.

## Patentansprüche

1. Fähigkeitsbewertungssystem mit:
einer Fernbetätigungsvorrichtung (30), die konfiguriert ist, es einer Betätigungsperson zu ermöglichen, eine Baumaschine (50) fernzusteuern, wobei die Fernbetätigungsvorrichtung (30) eine Betriebsartausführungseinheit (302) umfasst, die konfiguriert ist, eine ausgewählte Betriebsart auszuführen, die aus einer tatsächlichen Arbeitsbetriebsart zum tatsächlichen Ausführen einer Fernbetätigung der Baumaschine (50), einer Simulationsbetriebsart zum Ausführen, mittels eines Baumaschinenmodells in einer virtuellen Baustellenumgebung für ein Simulieren eines Betriebs der Baumaschine (50), einer Simulation der Fernbetätigung der Baumaschine (50) und einer Testbetriebsart zum Ausführen eines vorbestimmten Tests durch ein tatsächliches Ausführen der Fernbetätigung der Baumaschine (50) oder durch ein Ausführen der Simulation der Fernbetätigung der Baumaschine (50) auszuwählen ist; und
einem Server (10), der kommunikationsfähig mit der Fernbetätigungsvorrichtung (30) verbunden ist,
wobei der Server (10) umfasst:
eine Beschaffungseinheit (11), die konfiguriert ist, eine Betätigungsaufzeichnung der Fernbetätigungsvorrichtung (30) durch die Betätigungsperson in der tatsächlichen Arbeitsbetriebsart und der Simulationsbetriebsart und ein Testergebnis des vorbestimmten Tests zur Sicherstellung, dass eine Fähigkeitsstufe der Betätigungsperson für die Fernbetätigung höher oder gleich einer bestimmten Stufe ist, zu beschaffen, wobei die Betätigungsaufzeichnung eine tatsächliche Arbeitsaufzeichnung, die erhalten wird, indem die Fernbetätigung der Baumaschine tatsächlich ausgeführt wird, und eine Simulationsaufzeichnung, die erhalten wird, indem die Simulation der Fernbetätigung der Baumaschine ausgeführt wird, umfasst;
eine Arbeitshistoriendatenbank (17, 18, 19), die konfiguriert ist, die Betätigungsaufzeichnung und das Testergebnis als eine Arbeitshistorie zu speichern;
eine Fähigkeitsstufenberechnungseinheit (13), die konfiguriert ist, die Fähigkeitsstufe der Betätigungsperson für die Fernbetätigung auf der Grundlage der Arbeitshistorie, die in der Arbeitshistoriendatenbank (17, 18, 19) gespeichert ist, zu berechnen; und
eine Präsentationseinheit (12), die konfiguriert ist, die Fähigkeitsstufe zu präsentieren.

2. Fähigkeitsbewertungssystem nach Anspruch 1, wobei das Testergebnis ein Ergebnis eines vorbestimmten Tests zur Sicherstellung ist, dass die Fähigkeitsstufe der Betätigungsperson für zumindest eine aus der Fernbetätigung, wenn die Fernbetätigung der Baumaschine (50) tatsächlich ausgeführt wird, und einer Fernbetätigung bei der Simulation, wenn die Simulation der Fernbetätigung ausgeführt wird, höher oder gleich einer bestimmten Stufe ist.

3. Fähigkeitsbewertungssystem nach Anspruch 1, wobei
die Fernbetätigungsvorrichtung (30) ferner eine Betriebsartumschalteinheit (301) umfasst, die konfiguriert ist, eine Umschaltanweisung durch die Betätigungsperson zu empfangen, um ein Umschalten zwischen zumindest zwei der Betriebsarten für ein Auswählen der ausgewählten Betriebsart zu machen, und
die Betriebsartausführungseinheit (302) die Betriebsart, die durch die Betriebsartumschalteinheit (301) empfangen wird, ausführt.

4. Fähigkeitsbewertungssystem nach einem der Ansprüche 1 bis 3, wobei
die Betätigungsaufzeichnung zumindest eine erste Arbeitszeit in der tatsächlichen Arbeitsbetriebsart und eine zweite Arbeitszeit in der Simulationsbetriebsart umfasst,
die Arbeitshistoriendatenbank (17, 18, 19) einen kumulativen Wert der ersten Arbeitszeit und einen kumulativen Wert der zweiten Arbeitszeit speichert und
die Fähigkeitsstufenberechnungseinheit (13) die Fähigkeitsstufe der Betätigungsperson für die Fernbetätigung berechnet, um höher zu sein, wenn der kumulative Wert der ersten Arbeitszeit und der kumulative Wert der zweiten Arbeitszeit, die in der Arbeitshistoriendatenbank (17, 18, 19) gespeichert sind, zunehmen.

5. Fähigkeitsbewertungssystem nach einem der Ansprüche 1 bis 4, wobei
das Testergebnis ein Bestehen- oder Durchfallen-Ergebnis des Tests ist, der in der Testbetriebsart ausgeführt wird, und,
wenn das Testergebnis ein Bestehen angibt, die Fähigkeitsstufenberechnungseinheit (13) die Fähigkeitsstufe höher berechnet als wenn das Testergebnis ein Durchfallen angibt.

6. Fähigkeitsbewertungssystem nach einem der Ansprüche 1 bis 5, wobei
die Fernbetätigung eine Vielzahl von Arbeitsinhalten umfasst,
die Betriebsartausführungseinheit (302) die tatsächliche Arbeitsbetriebsart, die Simulationsbetriebsart und die Testbetriebsart für jeden der Arbeitsinhalte ausführt,
die Arbeitshistoriendatenbank (17, 18, 19) jeden des kumulativen Werts der ersten Arbeitszeit in der tatsächlichen Arbeitsbetriebsart, des kumulativen Werts der zweiten Arbeitszeit in der Simulationsbetriebsart und des Bestehen- oder Durchfallen-Ergebnisses des Tests, der in der Testbetriebsart ausgeführt wird, in Verbindung mit jedem der ausgeführten Arbeitsinhalte speichert und
die Fähigkeitsstufenberechnungseinheit (13) die Fähigkeitsstufe für jeden der Arbeitsinhalte berechnet.

7. Fähigkeitsbewertungssystem nach einem der Ansprüche 1 bis 6, wobei
die tatsächliche Arbeitsbetriebsart, die Simulationsbetriebsart und die Testbetriebsart jeweils durch die Baumaschine (50), die eine unterschiedliche Spezifikation aufweist, ausführbar sind,
die Arbeitshistoriendatenbank (17, 18, 19) jeden des kumulativen Werts der ersten Arbeitszeit in der tatsächlichen Arbeitsbetriebsart, des kumulativen Werts der zweiten Arbeitszeit in der Simulationsbetriebsart und des Bestehen- oder Durchfallen-Ergebnisses des Tests, der in der Testbetriebsart ausgeführt wird, in Verbindung mit der ausgeführten Spezifikation speichert und
die Fähigkeitsstufenberechnungseinheit (13) die Fähigkeitsstufe entsprechend der Spezifikation berechnet.

8. Fähigkeitsbewertungssystem nach einem der Ansprüche 1 bis 7, wobei der Server (10) ferner eine Verhinderungseinheit (14) umfasst, die konfiguriert ist, zu verhindern, dass die Betätigungsperson die tatsächliche Arbeitsbetriebsart zum tatsächlichen Ausführen der Fernbetätigung der Baumaschine (50) ausführt, wenn die Fähigkeitsstufe kleiner als eine Referenzstufe ist.

9. Fähigkeitsbewertungssystem nach einem der Ansprüche 1 bis 8, wobei
die Beschaffungseinheit (11) eine Anfrageanforderung der Betätigungsperson von einem Auftraggeberendgerät (200) beschafft, das in Besitz eines Arbeitsauftraggebers ist, der die Arbeit der Fernbetätigung bei der Betätigungsperson in Auftrag gibt, und,
wenn die Beschaffungseinheit (11) die Anfrageanforderung beschafft, die Präsentationseinheit (12) das Auftraggeberendgerät (200) über die Fähigkeitsstufe der Betätigungsperson benachrichtigt.

10. Fähigkeitsbewertungsverfahren in einem Server (10), der kommunikationsfähig mit einer Fernbetätigungsvorrichtung (30) verbunden ist, um es einer Betätigungsperson zu erlauben, eine Baumaschine (50) fernzusteuern, wobei das Fähigkeitsbewertungsverfahren umfasst:
ein Ausführen einer ausgewählten Betriebsart, die aus einer tatsächlichen Arbeitsbetriebsart zum tatsächlichen Ausführen der Fernbetätigung der Baumaschine (50), einer Simulationsbetriebsart zum Ausführen, durch ein Baumaschinenmodell in einer virtuellen Baustellenumgebung für ein Simulieren eines Betriebs der Baumaschine (50), einer Simulation der Fernbetätigung der Baumaschine (50) und einer Testbetriebsart zum Ausführen eines vorbestimmten Tests durch ein tatsächliches Ausführen der Fernbetätigung der Baumaschine (50) oder durch ein Ausführen der Simulation der Fernbetätigung der Baumaschine (50) auszuwählen ist;
ein Beschaffen (101) einer Betätigungsaufzeichnung der Fernbetätigungsvorrichtung (30) durch die Betätigungsperson in der tatsächlichen Arbeitsbetriebsart und der Simulationsbetriebsart und eines Testergebnisses des vorbestimmten Tests zur Sicherstellung, dass die Fähigkeitsstufe der Betätigungsperson für die Fernbetätigung höher oder gleich einer bestimmten Stufe ist, wobei die Betätigungsaufzeichnung eine tatsächliche Arbeitsaufzeichnung, die durch ein tatsächliches Ausführen der Fernbetätigung der Baumaschine (50) erhalten wird, und eine Simulationsaufzeichnung, die durch ein Ausführen der Simulation der Fernbetätigung der Baumaschine (50) erhalten wird, umfasst;
ein Speichern (102) der Betätigungsaufzeichnung und des Testergebnisses als eine Arbeitshistorie in einer Arbeitshistoriendatenbank (17, 18, 19);
ein Berechnen (103) der Fähigkeitsstufe der Betätigungsperson für die Fernbetätigung auf der Grundlage der Arbeitshistorie, die in der Arbeitshistoriendatenbank (17, 18, 19) gespeichert ist;
ein Präsentieren (105) der Fähigkeitsstufe.

11. Nicht-vergängliches computerlesbares Aufzeichnungsmedium, das ein Programm zur Veranlassung eines Computers, das Fähigkeitsbewertungsverfahren nach Anspruch 10 auszuführen, aufzeichnet.

## Revendications

1. Système d'évaluation de compétence comprenant :
un dispositif de télé-fonctionnement (30) configuré pour permettre à un opérateur de faire télé-fonctionner un engin de chantier (50), dans lequel le dispositif de télé-fonctionnement (30) inclut une unité d'exécution de mode (302) qui est configurée pour exécuter un mode sélectionné à sélectionner parmi un mode travaux réels d'exécution réelle du télé-fonctionnement de l'engin de chantier (50), un mode simulation d'exécution, par un modèle d'engin de chantier dans un environnement de site virtuel pour simuler un fonctionnement de l'engin de chantier (50), d'une simulation du télé-fonctionnement de l'engin de chantier (50), et un mode test d'exécution d'un test prédéterminé en exécutant réellement le télé-fonctionnement de l'engin de chantier (50) ou en exécutant la simulation du télé-fonctionnement de l'engin de chantier (50) ; et
un serveur (10) connecté en communication au dispositif de télé-fonctionnement (30),
dans lequel le serveur (10) inclut :
une unité d'acquisition (11) configurée pour acquérir un enregistrement de fonctionnement du dispositif de télé-fonctionnement (30) émanant de l'opérateur dans le mode travaux réels et le mode simulation, et un résultat de test du test prédéterminé pour assurer qu'un niveau de compétence de l'opérateur pour le télé-fonctionnement est égal ou supérieur à un certain niveau, dans lequel l'enregistrement de fonctionnement inclut un enregistrement de travaux réels obtenu en exécutant réellement le télé-fonctionnement de l'engin de chantier et un enregistrement de simulation obtenu en exécutant la simulation du télé-fonctionnement de l'engin de chantier ;
une base de données d'historique de travaux (17, 18, 19) configurée pour stocker l'enregistrement de fonctionnement et le résultat de test en tant qu'historique de travaux ;
une unité de calcul de niveau de compétence (13) configurée pour calculer le niveau de compétence de l'opérateur pour le télé-fonctionnement sur la base de l'historique de travaux stocké dans la base de données d'historique de travaux (17, 18, 19) ; et
une unité de présentation (12) configurée pour présenter le niveau de compétence.

2. Système d'évaluation de compétence selon la revendication 1, dans lequel le résultat de test est un résultat d'un test prédéterminé pour assurer que le niveau de compétence de l'opérateur pour au moins un télé-fonctionnement parmi le télé-fonctionnement lors de l'exécution réelle du télé-fonctionnement de l'engin de chantier (50), et un télé-fonctionnement relatif à la simulation lors de l'exécution de la simulation du télé-fonctionnement est égal ou supérieur à un certain niveau.

3. Système d'évaluation de compétence selon la revendication 1, dans lequel
le dispositif de télé-fonctionnement (30) inclut en outre une unité de permutation de mode (301) configurée pour recevoir une instruction de permutation émanant de l'opérateur pour effectuer une permutation entre au moins deux des modes pour sélectionner le mode sélectionné ; et
l'unité d'exécution de mode (302) exécute le mode reçu par l'unité de permutation de mode (301).

4. Système d'évaluation de compétence selon l'une quelconque des revendications 1 à 3, dans lequel
l'enregistrement de fonctionnement inclut un premier temps de travaux dans le mode travaux réels et un second temps de travaux dans le mode simulation,
la base de données d'historique de travaux (17, 18, 19) stocke une valeur cumulative du premier temps de travaux et une valeur cumulative du second temps de travaux, et
l'unité de calcul de niveau de compétence (13) calcule le niveau de compétence de l'opérateur pour le télé-fonctionnement qui doit être plus élevé lorsque la valeur cumulative du premier temps de travaux et la valeur cumulative du second temps de travaux stockées dans la base de données d'historique de travaux (17, 18, 19) augmentent.

5. Système d'évaluation de compétence selon l'une quelconque des revendications 1 à 4, dans lequel
le résultat de test est un résultat de succès ou d'échec du test exécuté dans le mode test, et
lorsque le résultat de test indique un succès, l'unité de calcul de niveau de compétence (13) calcule le niveau de compétence qui est plus élevé que lorsque le résultat de test indique un échec.

6. Système d'évaluation de compétence selon l'une quelconque des revendications 1 à 5, dans lequel
le télé-fonctionnement inclut une pluralité de contenus de travaux,
l'unité d'exécution de mode (302) exécute le mode travaux réels, le mode simulation et le mode test pour chacun des contenus de travaux,
la base de données d'historique de travaux (17, 18, 19) stocke chaque élément informationnel parmi la valeur cumulative du premier temps de travaux dans le mode travaux réels, la valeur cumulative du second temps de travaux dans le mode simulation et le résultat de succès ou d'échec du test exécuté dans le mode test en association avec chacun des contenus de travaux exécutés, et
l'unité de calcul de niveau de compétence (13) calcule le niveau de compétence pour chacun des contenus de travaux.

7. Système d'évaluation de compétence selon l'une quelconque des revendications 1 à 6, dans lequel
le mode travaux réels, le mode simulation et le mode test peuvent chacun être exécutés par l'engin de chantier (50) qui dispose d'une spécification différente,
la base de données d'historique de travaux (17, 18, 19) stocke chaque élément informationnel parmi la valeur cumulative du premier temps de travaux dans le mode travaux réels, la valeur cumulative du second temps de travaux dans le mode simulation et le résultat de succès ou d'échec du test exécuté dans le mode test en association avec la spécification exécutée, et
l'unité de calcul de niveau de compétence (13) calcule le niveau de compétence correspondant à la spécification.

8. Système d'évaluation de compétence selon l'une quelconque des revendications 1 à 7, dans lequel le serveur (10) inclut en outre une unité d'empêchement (14) configurée pour empêcher l'opérateur d'exécuter le mode travaux réels d'exécution réelle du télé-fonctionnement de l'engin de chantier (50) lorsque le niveau de compétence est inférieur à un niveau de référence.

9. Système d'évaluation de compétence selon l'une quelconque des revendications 1 à 8, dans lequel
l'unité d'acquisition (11) acquiert une requête d'interrogation de l'opérateur en provenance d'un terminal d'ordonnateur (200) possédé par un ordonnateur de travaux qui ordonne les travaux du télé-fonctionnement à l'opérateur, et
lorsque l'unité d'acquisition (11) acquiert la requête d'interrogation, l'unité de présentation (12) notifie au terminal d'ordonnateur (200) le niveau de compétence de l'opérateur.

10. Procédé d'évaluation de compétence dans un serveur (10) connecté en communication à un dispositif de télé-fonctionnement (30) pour permettre à un opérateur de faire télé-fonctionner un engin de chantier (50), le procédé d'évaluation de compétence comprenant :
l'exécution d'un mode sélectionné à sélectionner parmi un mode travaux réels d'exécution réelle du télé-fonctionnement de l'engin de chantier (50), un mode simulation d'exécution, par un modèle d'engin de chantier dans un environnement de site virtuel pour simuler un fonctionnement de l'engin de chantier (50), d'une simulation du télé-fonctionnement de l'engin de chantier (50), et un mode test d'exécution d'un test prédéterminé en exécutant réellement le télé-fonctionnement de l'engin de chantier (50) ou en exécutant la simulation du télé-fonctionnement de l'engin de chantier (50) ;
l'acquisition (101) d'un enregistrement de fonctionnement du dispositif de télé-fonctionnement (30) émanant de l'opérateur dans le mode travaux réels et le mode simulation, et d'un résultat de test du test prédéterminé pour assurer qu'un niveau de compétence de l'opérateur pour le télé-fonctionnement est égal ou supérieur à un certain niveau, dans lequel l'enregistrement de fonctionnement inclut un enregistrement de travaux réels obtenu en exécutant réellement le télé-fonctionnement de l'engin de chantier (50) et un enregistrement de simulation obtenu en exécutant la simulation du télé-fonctionnement de l'engin de chantier (50) ;
le stockage (102) de l'enregistrement de fonctionnement et du résultat de test en tant qu'historique de travaux dans une base de données d'historique de travaux (17, 18, 19) ;
le calcul (103) du niveau de compétence de l'opérateur pour le télé-fonctionnement sur la base de l'historique de travaux stocké dans la base de données d'historique de travaux (17, 18, 19) ; et
la présentation (105) du niveau de compétence.

11. Support d'enregistrement non transitoire lisible par ordinateur enregistrant un programme pour forcer un ordinateur à exécuter le procédé d'évaluation de compétence selon la revendication 10.
